# EUROPÄISCHE PATENTANMELDUNG

(11) **EP 3 910 394 A1**
(43) Veröffentlichungstag der Anmeldung: **17.11.2021**
(21) Anmeldenummer: 20175114.6
(22) Anmeldetag: 16.05.2020
(51) Int. Cl.: G02B 6/44, H02G 3/22, H02G 15/013

(54) **VERWENDUNG EINER DURCHFÜHRUNG**

(71) Anmelder: Hauff-Technik GmbH & Co. KG, 89568 Hermaringen (DE)
(72) Erfinder: SCHMID, Jörg, 89168 Niederstotzingen (DE); SCHEURING, Horst, 89542 Herbrechtingen (DE); KURZ, Ralf, 89537 Giengen (DE)
(74) Vertreter: König Szynka Tilmann von Renesse Patentanwälte Partnerschaft mbB

(57) **Zusammenfassung**

Die Erfindung betrifft eine Verwendung einer Durchführung (1,100) und eines Ansetzstücks (16,160) mit einem Datenkabel (10), wobei
i) die Durchführung (1,100) an oder in einer Durchgangsöffnung (2) in einer Wand (3) oder Bodenplatte eines Gebäudes (201) befestigt wird;
ii) durch die Durchführung (1,100) und damit Durchgangsöffnung (2) das Datenkabel (10) solchermaßen verlegt wird, dass es sich von einer ersten (11) zu einer entgegengesetzten zweiten Seite (12) der Wand (3) oder Bodenplatte erstreckt;
iii) von der zweiten Seite (12) der Wand (3) oder Bodenplatte her das Ansetzstück (16,160) an oder in die Durchgangsöffnung (2) gesetzt und dort befestigt wird, wobei das Ansetzstück (16,160) einen Stecker (25) des Datenkabels (10) aufweist, über den ein weiteres Datenkabel (30) mit dem Datenkabel (10) zusammensteckbar ist.

## Beschreibung

Die vorliegende Erfindung betrifft die Verwendung einer Durchführung zusammen mit einem Ansetzstück und einem Datenkabel.

Durchführungen sind aus dem Stand der Technik bekannt und werden dazu benutzt, eine Leitung, wie ein Kabel oder Rohr, durch eine Wand oder Bodenplatte eines Gebäudes hindurchzuverlegen. Wird bspw. ein Datenkabel in ein Gebäude eingeführt, erstreckt es sich dann im Gebäudeinneren von der Durchführung entlang der Wand bzw. Bodenplatte bis zu einer Anschlussdose. Dort wird es mit einem weiteren Datenkabel verbunden, also an das gebäudeinterne Netz angeschlossen.

Der vorliegenden Erfindung liegt das technische Problem zugrunde, eine vorteilhafte Verwendung bzw. Anordnung als Gegenstand einer solchen Verwendung anzugeben.

Dies wird erfindungsgemäß mit der Verwendung gemäß Anspruch 1 gelöst. Dabei wird die Durchführung an oder in der Wand bzw. Bodenplatte befestigt (i), wird durch die Durchführung das Datenkabel verlegt (ii), und wird von einer Seite der Wand oder Bodenplatte her ein Ansetzstück, das einen Stecker des Datenkabels bildet bzw. trägt, an oder in die Durchgangsöffnung gesetzt und dort befestigt (iii). Über diesen Stecker ist das Kabel, das sich durch die Durchführung und damit durch die Wand oder Bodenplatte erstreckt, dann mit einem weiteren Datenkabel zusammensteckbar, also mit dem Gebäudenetz in dem Beispiel oben.

Bildlich gesprochen kann das Ansetzstück damit wie eine Datenkabel-Steckdose genutzt werden, der Stecker und insbesondere des Datenkabel können an dem Ansetzstück zuverlässig gehalten und damit geschützt sein, z. B. vor Kabelbruch. Es erstreckt sich dann zwar das weitere Datenkabel, das an diese "Steckdose" gesetzt wird, entlang der Wand oder Bodenplatte, kann es also genauso beschädigungsgefährdet wie das Datenkabel in dem Beispiel eingangs sein. Das weitere Datenkabel kann jedoch aufgrund der Steckverbindung vergleichsweise einfach ausgetauscht, bspw. durch ein mit einem Stecker vorkonfektioniertes Kabel ersetzt werden. Im Falle eines Glasfaseranschlusses kann das weitere Datenkabel bspw. ein sogenanntes Patchkabel sein. Der Austausch ist jedenfalls einfach durch Stecken möglich, es muss also bspw. in dem beschriebenen Schadensfall kein Spleißgerät vor Ort bereitgestellt werden.

Bevorzugte Ausgestaltungen finden sich in den abhängigen Ansprüchen und der gesamten Offenbarung, wobei in der Darstellung nicht immer im Einzelnen zwischen den unterschiedlichen Anspruchskategorien unterschieden wird; jedenfalls implizit ist die Offenbarung sowohl auf Verwendungs- bzw. Verfahrens- als auch auf Vorrichtungsaspekte zu lesen. Wird bspw. eine bestimmte Durchführungsanordnung beschrieben, die sich im Zuge einer Verwendung ergibt, ist dies zugleich als Offenbarung der Verwendung zu betrachten, und umgekehrt.

Die Durchführung wird in Schritt i) an oder in der Durchgangsöffnung angeordnet und befestigt. Axial gesehen kann sie die Durchgangsöffnung zumindest teilweise oder bevorzugt vollständig bedecken, dabei aber ihrerseits im Allgemeinen auch noch außerhalb der Durchgangsöffnung angeordnet sein. Bevorzugt wird sie in die Durchgangsöffnung eingesetzt, erstreckt sich dann also jedenfalls ein Abschnitt der Durchführung innerhalb der Durchgangsöffnung.

Das Ansetzstück weist den Stecker auf, es kann im Allgemeinen als für sich monolithisches Teil selbst den Stecker bilden. Andererseits und bevorzugt kann der Stecker aber auch mit dem übrigen Ansetzstück zusammengesetzt sein. In diesem Fall wird der Stecker von dem übrigen Ansetzstück bevorzugt getragen, also in einer definierten Relativposition zum übrigen Ansetzstück gehalten, jedenfalls nach, bevorzugt auch bereits während des Ansetzens gemäß Ziffer iii). Es kann insbesondere das Datenkabel mit dem Stecker vorkonfektioniert sein und kann die Einheit aus Datenkabel und Stecker mit dem übrigen Ansetzstück zusammengesetzt werden bzw. sein, vgl. die nachstehend diskutierten Möglichkeiten im Detail.

Generell weist der Stecker einen Steckverbinder auf, im Falle des bevorzugten Glasfaserkabels kann es sich bspw. um einen FC-, ST-, FDDI-, LC- oder SC-Steckverbinder handeln, insbesondere SC-Duplex. Sofern das Datenkabel mehradrig ist, also mehrere Kabelkerne hat (siehe unten im Detail), kann der Stecker auch mehrere Steckverbinder umfassen, bevorzugt je Kabelkern einen, also bspw. je Glasfaser einen Steckverbinder (vgl. SC-Duplex). Das Ansetzstück kann auch mehrere Stecker aufweisen, bspw. zwei SC-Duplex-Steckverbinder im Falle von vier Glasfasern.

Unabhängig von der Bauform im Einzelnen kann über den Stecker eine funktionale Verbindung mit dem weiteren Datenkabel hergestellt werden, bildet der Stecker dann also gemeinsam mit dem Stecker des weiteren Datenkabels eine Verbindungsstelle, über welche Daten übertragen werden können bzw. in der Anwendung übertragen werden. Diese Verbindungsstelle ist, wenn das Ansetzstück nach Schritt iii) fertig montiert ist, von einer Mündung der Durchgangsöffnung bspw. axial um nicht mehr als 50 cm, 40 cm, 30 cm, 20 cm bzw. 10 cm entfernt; je nach Bauform kann sie auch bündig in der Mündung liegen, es kann aber andererseits auch einen axialen Mindestabstand von 5 mm, 10 mm bzw. 15 mm geben.

Radial kann die Schnittstelle von der Mittenachse der Durchgangsöffnung bspw. um nicht mehr als 30 cm, 20 cm, 10 cm bzw. 5 cm entfernt sein; sie kann auf der Mittenachse liegen, mögliche Mindestabstände können aber bspw. auch 5 mm bzw. 10 mm betragen. Generell beziehen sich die Angaben "axial", "radial" und "umlaufend", sowie die zugehörigen Richtungen (Axialrichtung etc.), im Rahmen dieser Offenbarung auf die Längsachse des Datenkabels. Je nach Orientierung der Durchgangsöffnung kann diese bevorzugt senkrecht auf der Seitenfläche der Wand oder Bodenplatte stehen (wenn sich die Durchgangsöffnung senkrecht und nicht schräg zu der Seitenfläche erstreckt).

Im Allgemeinen kann das Datenkabel bspw. auch einen Metallkern haben, kann es sich also z. B. um ein Kupferkabel handeln. Bevorzugt ist ein Glasfaserkabel, ist der Kabelkern also eine Glasfaser. Das Glasfaserkabel kann auch mehrere Glasfasern aufweisen, also mindestens 2, 3 oder 4, wobei (davon unabhängig) mögliche Obergrenzen bspw. bei höchstens 24, 12, 8 bzw. 6 Glasfasern liegen können. Die Glasfaser bzw. Glasfasern können bspw. von einem gemeinsamen Kabelmantel umhüllt sein, in diesem kann zusätzlich bspw. eine Verstärkungsfaser verlaufen. Unabhängig von diesen Details weist das Datenkabel also bevorzugt einen Kabelkern und einen Kabelmantel auf, wobei das Ansetzstück weiter bevorzugt gegen den Kabelmantel gedichtet ist bzw. wird.

Die Durchführung kann für das Ansetzstück bevorzugt einen Befestigungspunkt darstellen, also der Verankerung des Ansetzstücks an oder in der Durchgangsöffnung dienen. In anderen Worten wird somit in Schritt iii) das Ansetzstück an der Durchführung und damit an oder in der Durchgangsöffnung befestigt. Im Allgemeinen können die Durchführung und das Ansetzstück dabei z. B. auch axial aufeinanderfolgend in der Durchgangsöffnung angeordnet sein und bspw. mit einer langen, das Ansetzstück durchsetzenden Schraube relativfixiert werden.

In bevorzugter Ausgestaltung bildet die Durchführung einen Kanal, in welchen das Ansetzstück in Schritt iii) zumindest teilweise eingeschoben wird. Damit kann eine definierte Kontaktstelle zwischen Durchführung und Ansetzstück geschaffen werden, das Ansetzstück und damit das Datenkabel können stabil und somit geschützt gehalten sein. Die Montage des Ansetzstücks kann damit bspw. auch von Unregelmäßigkeiten der die Durchgangsöffnung in der Wand oder Bodenplatte begrenzenden Laibung entkoppelt sein, also bspw. von Bohrausbrüchen etc. Der Kanal erstreckt sich axial, radial wird er von einer Innenwandfläche der Durchführung begrenzt. Das Ansetzstück wird zumindest teilweise eingeschoben, bspw. über mindestens 20 %, 30 %, 40 % bzw. 50 % seiner axialen Erstreckung; es kann auch vollständig eingeschoben werden, mögliche Obergrenzen können aber bspw. auch bei höchstens 95 % bzw. 90 % der axialen Erstreckung des Ansetzstücks liegen.

Gemäß einer bevorzugten Ausführungsform weist die Durchführung ein Hülsrohr auf, das in Schritt i) zumindest teilweise in die Durchgangsöffnung eingeschoben und darin befestigt wird. Auch bei der fertig befestigten Durchführung kann also noch ein Abschnitt des Hülsrohres aus der Durchgangsöffnung hervorstehen, insbesondere zur ersten Seite der Wand oder Bodenplatte hin. Handelt es sich bei der ersten Seite in bevorzugter Ausgestaltung um die Gebäudeaußenseite (siehe unten im Detail), kann bevorzugt ein gebäudeaußenseitig im Erdreich verlaufendes Schutzrohr mit dem Hülsrohr zusammengesetzt sein oder auch selbst das Hülsrohr bilden. In diesem Schutzrohrsystem kann dann das Datenkabel verlegt werden. Je nach Art der Durchführung gibt es für die Befestigung des Hülsrohres in der Durchgangsöffnung unterschiedliche Möglichkeiten (z. B. kraftschlüssig oder durch Verguss), siehe unten im Detail. Generell wird das Datenkabel in Schritt ii) bevorzugt von der ersten Seite aus zur zweiten Seite verlegt, insbesondere also von der Gebäudeinnen- zur Gebäudeaußenseite.

Gemäß einer bevorzugten Ausführungsform bildet das Hülsrohr den Kanal, in welchen das Ansetzstück in Schritt iii) zumindest teilweise eingeschoben wird. Das Hülsrohr kann in diesem Fall z. B. an der zweiten Seite im Wesentlichen bündig in der Mündung der Durchgangsöffnung liegen. Es kann sich axial bspw. über die gesamte Durchgangsöffnung erstrecken und zur ersten Seite der Wand oder Bodenplatte aus der Durchgangsöffnung hervorstehen. Das Hülsrohr wird bevorzugt durch Vergießen in der Durchgangsöffnung befestigt.

Unabhängig vom Aufbau der Durchführung im Einzelnen wird das Ansetzstück in Schritt iii) in bevorzugter Ausgestaltung gegen die Durchführung gedichtet. Dies kann im Allgemeinen bspw. auch mit einer Dichtmasse erfolgen, die zunächst fließfähig ist und dann zumindest teilweise aushärtet. Bevorzugt werden Durchführung und Ansetzstück mit einem Elastomerelement, also einem Körper aus einem Elastomermaterial gegeneinander gedichtet. Das Elastomermaterial kann ganz allgemein ein Kunststoff mit elastischem Verhalten sein. Dessen Shore-Härte (Shore A) kann bspw. bei höchstens 90 Shore, 80 Shore, 75 Shore bzw. 70 Shore 10 und (davon unabhängig) bspw. bei mindestens 20 Shore, 25 Shore, 30 Shore,35 Shore bzw. 40 Shore liegen. Es kann sich bspw. um ein Kautschukmaterial handeln, vorzugsweise um einen Synthesekautschuk, etwa EPDM (Ethylen-Propylen-Dien, M-Gruppe). Ebenso kann es sich aber bspw. auch um einen Thermoplastischen Elastomer (TPE) oder ein Silikon-basiertes Material handeln, 15 etwa Silikonkautschuk bzw. Silikonelastomer.

Das Elastomerelement kann bspw. ein Elastomerring sein (mit z. B. rechteckigem oder O-ringförmigem Profil). Ein solcher Elastomerring wird axial zwischen einer Anlagefläche der Durchführung und einer Anlagefläche des Ansetzstücks gestaucht, bevorzugt ist er dabei außerhalb der Durchgangsöffnung angeordnet. Die Anlagefläche der Durchführung kann bspw. an einem Flansch ausgebildet sein, der axial außerhalb der Durchgangsöffnung sitzt und diese nach radial außen abdeckt (axial gesehen).

Gemäß einer bevorzugten Ausführungsform werden Durchführung und Ansetzstück gegeneinander gedichtet, indem das Elastomerelement des Einsetzstücks in den von der Durchführung gebildeten Kanal (siehe vorne) eingeschoben wird. Dort wird es in Schritt iii) axial gestaucht und damit radial gegen die den Kanal begrenzende Innenwand der Durchführung gedrückt. Diese Innenwand der Durchführung kann, wie vorstehend erwähnt, die Innenmantelfläche eines Hülsrohrs sein. Es kann aber auch ein axiales Endstück der Durchführung die den Kanal begrenzende Innenwand bilden, bspw. eine nachstehend geschilderte Pressdichtung, insbesondere ein Spannkörper davon.

Unabhängig davon im Einzelnen wird das Elastomerelement mit dem axialen Stauchen bevorzugt nicht nur nach radial außen gegen die Innenwand, sondern auch nach radial innen dichtend gegen das Kabel gedrückt, bspw. gegen den Kabelmantel. Der Kabelmantel kann bevorzugt axial innerhalb des Elastomerelements enden, es kann bzw. können also die Glasfaser(n) innerhalb des Elastomerelements aus dem Kabelmantel austreten. Das Elastomerelement kann in seinem Inneren insbesondere ein Kanalsystem bilden, wobei von diesem Verzweigungspunkt (Ende des Kabelmantels) mehrere Kanäle verzweigt zu jeweils einem Steckverbinder verlaufen können, bspw. für jeden Kabelkern / jede Glasfaser ein Kanal.

Gemäß einer bevorzugten Ausführungsform wird der Stecker bzw. werden die Steckverbinder des Datenkabels von einem Presskörper des Ansetzstücks getragen, mit dem das Elastomerelement axial gestaucht wird. Der Presskörper kann bspw. mit einer oder mehreren Schrauben axial zur Durchführung verspannt werden und dabei das Elastomerelement axial komprimieren. In dem Presskörper ist eine Durchgangsöffnung vorgesehen, in dieser kann der Stecker lagefixiert befestigt sein, bspw. geklebt oder bevorzugt über einen Formschluss. Der Stecker ist dann also axial formschlüssig am Presskörper gehalten, bspw. zwischen Elastomerelement und Presskörper.

Bei einer bevorzugten Ausführungsform weist das Ansetzstück eine erstarrte Vergussmasse auf, welches das Datenkabel und vorzugsweise zusätzlich den Stecker hält. Im Allgemeinen kann diese Variante auch mit einem zum Relativabdichten von Ansetzstück und Durchführung axial gestauchten und radial angedrückten Elastomerelement kombiniert sein, bevorzugt handelt es sich jedoch um Alternativen, vgl. auch die Ausführungsbeispiele zur Illustration. Die Vergussmasse, welches das Datenkabel hält, ist bei der Montage, also dem Ansetzen des Ansetzstücks, bereits erstarrt, also bereits während bzw. vor Schritt iii). In der erstarrten Vergussmasse kann der Kabelmantel des Datenkabels enden, kann also insbesondere ein Verzweigungspunkt liegen. Bis zu diesem erstrecken sich die Kabelkerne, insbesondere Glasfasern im Kabelmantel, von dort verlaufen sie in der erstarrten Vergussmasse jeweils für sich zum jeweiligen Steckverbinder. Die erstarrte Vergussmasse kann bspw. auf Polyurethan- oder Silikon-Basis vorgesehen sein.

Bei der Variante "Vergussmasse" kann ein Ansetzstückgehäuse den Hohlraum begrenzen, der mit der erstarrten Vergussmasse aufgefüllt ist. Es kann dann bspw. ein Abschnitt dieses Ansetzstückgehäuses in den von der Durchführung gebildeten Kanal eingeschoben werden (siehe vorne). Nach radial außen kann sich von dem Ansetzstückgehäuse ein Flansch erheben, über den das Ansetzstück an der Durchführung befestigt wird, bspw. mit Schrauben oder über einen Rastmechanismus. Dieser Flansch kann auch der Relativabdichtung von Ansetzstück und Durchführung dienen, also bspw. eine Anlagefläche bilden, gegen die ein ringförmiges Elastomerelement dichtet (siehe vorne).

Gemäß einer bevorzugten Ausführungsform wird die Durchführung in Schritt i) mit einem Elastomerkörper in der Durchgangsöffnung befestigt, der dazu axial gestaucht und damit radial gegen eine die Durchgangsöffnung in der Wand oder Bodenplatte begrenzende Laibung gedrückt wird. Im Falle einer Bohrung, bspw. einer Kernlochbohrung, kann z. B. die Wand selbst die Laibung bilden. Die Laibung kann aber andererseits auch von einem in die Wand oder Bodenplatte eingegossenen Futterrohr gebildet werden.

Unabhängig von diesen Details kann eine Durchführung mit Elastomerkörper axial beidseits des Elastomerkörpers angeordnete Spannkörper aufweisen, die über einen oder mehrere den Elastomerkörper durchsetzende Spannbolzen wirkverbunden sind. Durch Anziehen des bzw. der Spannbolzen wird der Elastomerkörper axial gestaucht und radial gegen die Laibung gedrückt. Ein solcher Aufbau wird auch als Pressdichtung bezeichnet (siehe vorne) und kann bspw. auch mit einem vorstehend erwähnten Hülsrohr kombiniert werden. Dieses kann an dem der ersten Seite zugewandten Spannkörper und/oder bevorzugt dem Elastomerkörper selbst befestigt sein und einen Teil eines Schutzrohrsystems bilden, siehe unten. Der der zweiten Seite zugewandte Spannkörper kann dann bspw. den Kanal bilden, in welchen das Elastomerelement des Ansetzstücks eingeschoben wird (das dann seinerseits durch axiales Stauchen nach radial außen angedrückt wird, siehe vorne).

Gemäß einer alternativ bevorzugten Ausführungsform wird die Durchführung mit einem Vergussmaterial in der Durchgangsöffnung befestigt, das dazu in Schritt i) in einem fließfähigen Zustand, also viskos-flüssig in die Durchgangsöffnung eingebracht wird. Bevorzugt ist ein volumenexpandierendes, insbesondere schäumendes Vergussmaterial. Das Vergussmaterial kann bspw. auf Harz-Basis, z. B. Polyurethan vorgesehen sein, insbesondere als Mehrkomponenten-Harz. Unabhängig von dem Material im Einzelnen weist die Durchführung in diesem Fall bevorzugt ein Hülsrohr auf (siehe vorne), wobei das Vergussmaterial dann bspw. den Ringraum zwischen einer Außenmantelfläche des Hülsrohrs und der Laibung auffüllen kann, jedenfalls in einem Axialabschnitt der Durchgangsöffnung. In diesen Ringraum kann das Vergussmaterial direkt eingebracht werden (z. B. mit einem Schlauch axial injiziert), oder es kann auch in einen außenseitig an dem Hülsrohr angeordneten Mantel injiziert werden, der das noch fließfähige Vergussmaterial zunächst beisammenhält und von dem expandierenden Vergussmaterial radial geweitet wird.

Unabhängig von der Bauform und Befestigung der Durchführung im Einzelnen wird diese auf der ersten Seite der Wand oder Bodenplatte in bevorzugter Ausgestaltung mit einem Schutzrohr verlängert, in dem in Schritt ii) das Datenkabel verlegt wird. Das Schutzrohr kann insbesondere mit einem Hülsrohr der Durchführung verbunden werden, siehe vorne. Hierbei kann die Durchführung eine Muffe bilden, in welche das Schutzrohr eingeschoben wird; es kann aber andererseits auch eine Muffe des Schutzrohres auf das Hülsrohr der Durchführung aufgeschoben werden.

In bevorzugter Ausgestaltung ist die erste Seite der Wand oder Bodenplatte eine Gebäudeaußenseite und die zweite Seite eine Gebäudeinnenseite. In anderen Worten ist die Wand eine Außenwand und/oder ist die Bodenplatte eine Fundament-Bodenplatte (auf welcher das Gebäude steht, also keine Zwischendecke). Das gebäudeaußenseitig an die Durchführung angeschlossene Schutzrohr kann sich dann bis zu einer Datenkabel-Verzweigungsstelle, etwa einem Verteilerkasten oder einer Spleißmuffe, oder vorzugsweise bis zu einem Anschlussgehäuse erstrecken. Letzteres kann analog der Spleißmuffe in den Boden eingebaut sein, im Unterschied dazu aber noch über eine Öffnung von oben zugänglich bleiben.

Im vorliegenden Zusammenhang kann ein solches zwischen der Datenkabel-Verzweigungsstelle (z. B. dem Verteilerkasten) und dem Gebäude angeordnetes Anschlussgehäuse als Zugangspunkt z. B. insofern von Vorteil sein, als dann zwischen diesem Zugangspunkt und dem Gebäude ein im Verhältnis kürzeres Datenkabel verlegt werden kann. Dieses kann an einem oder beiden Enden mit Steckern vorkonfektioniert sein, was die hauptanspruchsgemäße Montage vereinfachen kann. Das Datenkabel kann bspw. eine Länge von höchstens 20 m, 15 m bzw. 10 m haben, mit möglichen (davon unabhängigen) Untergrenzen bei bspw. mindestens 1,5 m, 2 m, 4 m bzw. 6 m. Mit einer solchen vergleichsweise kurzen Länge lässt sich das Datenkabel dann in Schritt ii) auch verlegen, wenn es endseitig bereits mit Steckern vorkonfektioniert ist. Diese Vorkonfektionierung kann andererseits die Integration des Datenkabels/Steckers in das Ansetzstück vereinfachen.

Wie bereits erwähnt, ist das Datenkabel in bevorzugter Ausgestaltung ein Glasfaserkabel. Die erwähnte Vorkonfektionierung etc. kann hier im Besonderen zu tragen kommen, weil das Ausstatten eines Glasfaserkabels mit einem Stecker Spezialwerkzeug erfordern und dementsprechend aufwendig sein kann (z. B. ein Spleißgerät notwendig macht).

Die Erfindung betrifft auch eine Durchführungsanordnung, die sich insbesondere im Zuge einer vorliegend diskutierten Verwendung ergeben kann. Gegenstand der Durchführungsanordnung sind die Durchführung, die Wand oder Bodenplatte, das Datenkabel und das Ansetzstück. Die Durchführung ist dabei an oder in der Durchgangsöffnung befestigt, das Datenkabel ist durch die Durchführung verlegt, und das Ansetzstück ist an oder in die Durchgangsöffnung gesetzt. Es trägt einen Stecker, über den das Datenkabel mit einem weiteren Datenkabel zusammensteckbar ist. Bezüglich weiterer Details wird ausdrücklich auf die vorstehend diskutierten Möglichkeiten verwiesen.

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: in einem schematischen Schnitt eine erste Durchführungsanordnung bei einer erfindungsgemäßen Verwendung;
- Figur 2: in einem schematischen Schnitt eine zweite Durchführungsanordnung im Zuge einer erfindungsgemäßen Verwendung;
- Figur 3: eine schematische Darstellung zur Illustration einer Durchführungsanordnung gemäß Figur 1 oder 2 als Teil eines Datenkabelnetzes.

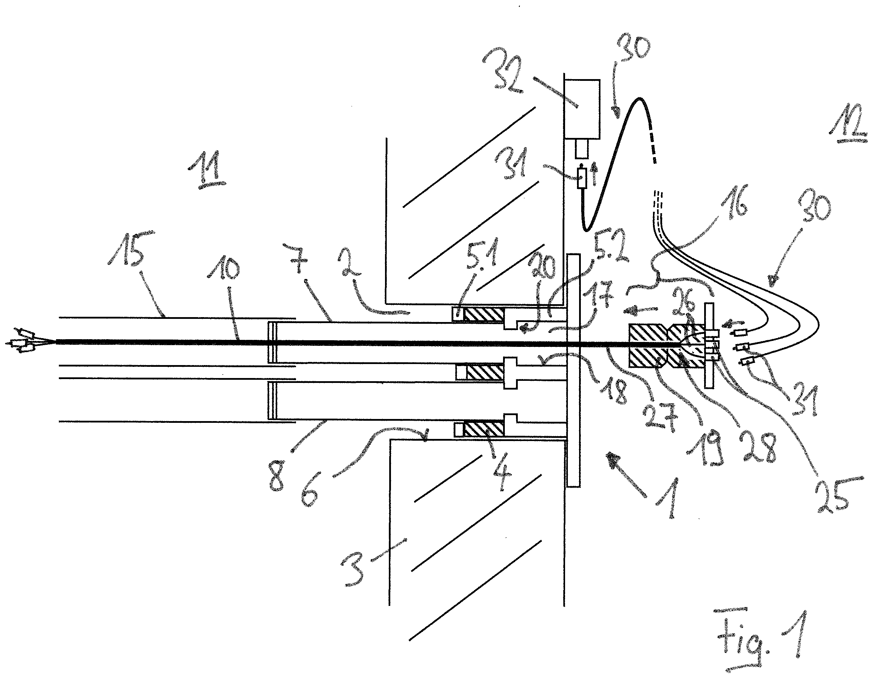

Figur 1 zeigt eine Durchführung 1, die in einer Durchgangsöffnung 2 in einer Wand 3 befestigt ist. Dazu weist die Durchführung 1 einen Elastomerkörper 4 auf, der zwischen zwei Spannkörpern 5.1,5.2 axial gestaucht wird. Infolgedessen wird er zum einen dichtend gegen eine die Durchgangsöffnung 2 begrenzende Laibung 6 gedrückt, und zum anderen wird er nach radial innen gegen ein Hülsrohr 7 der Durchführung 1 gedrückt. Vorliegend handelt es sich um eine sogenannte Mehrsparten-Durchführung, die zusätzlich zu dem für das Datenkabel 10 vorgesehenen Hülsrohr 7 ein weiteres Hülsrohr 8 aufweist, durch welches eine andere Leitung verlegt werden kann (z. B. Strom, Gas oder Wasser). Zum Stauchen des Elastomerkörpers 4 sind die Spannkörper 5.1,5.2 über nicht dargestellte Spannbolzen miteinander wirkverbunden, die von der zweiten Seite 12 der Wand 3 her betätigt werden.

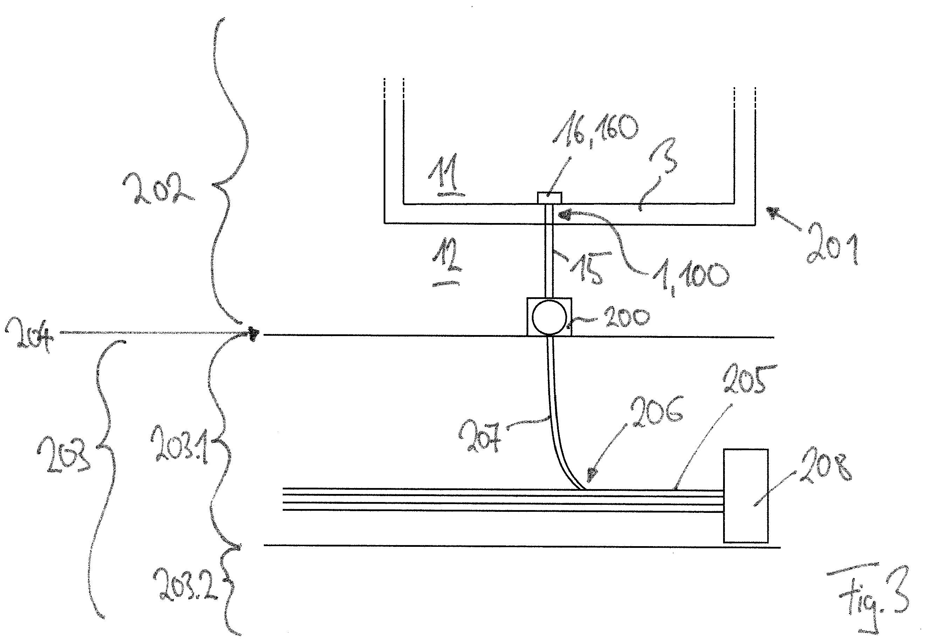

In der Situation gemäß Figur 1 wurden die hauptanspruchsgemäßen Schritte i) und ii) bereits vorgenommen, ist also die Durchführung 1 in der Durchgangsöffnung 2 befestigt und wurde das Datenkabel 10 bereits verlegt. Für diese Verlegung ist das Hülsrohr 7 auf der ersten Seite 11 der Wand 3, also gebäudeaußenseitig, mit einem Schutzrohr 15 verlängert, das bspw. an ein im Erdreich platziertes Anschlussgehäuse angebunden sein kann (vgl. Figur 3 zur Illustration).

In Figur 1 wird gemäß Schritt iii) ein Ansetzstück 16 von der zweiten Seite 12 der Wand 3 her an die Durchgangsöffnung 2 gesetzt, vorliegend wird es in einen Kanal 17 eingeschoben. Den Kanal 17 begrenzt eine Innenwand 18 der Durchführung 1 radial, vorliegend bildet der Spannkörper 5.2 diese Innenwand 18. Das Ansetzstück 16 weist ein Elastomerelement 19 auf, dieses sitzt im fertig eingeschobenen Zustand auf einer Stufe 20 in dem Spannkörper 5.2 auf. Ferner weist das Ansetzstück 16 einen Presskörper 21 auf, zwischen diesem und der Stufe 20 wird das eingeschobene Elastomerelement 19 dann axial gestaucht. Es legt sich infolgedessen dichtend an die Innenwand 18 an.

In dem Presskörper 21 ist ein Stecker 25 bzw. sind mehrere Steckverbinder formschlüssig gehalten. Vorliegend handelt es sich bei dem Datenkabel 10 um ein Glasfaserkabel mit mehreren Glasfasern 26, wobei jeder davon einer der Steckverbinder zugeordnet ist. Die Glasfasern 26 verlaufen in dem Elastomerelement 19 in einem gemeinsamen Kabelmantel 27, gegen den dann das verspannte Elastomerelement 19 dichtet, bis zu einem Verzweigungspunkt 28. Von dort sind die einzelnen Glasfasern 26 jeweils in einem eigenen Kanal zum jeweiligen Steckverbinder geführt.

Im fertig montierten Zustand bildet das Ansetzstück 16 mit dem Stecker 25 funktional eine Datenkabel-Steckdose, es kann ein weiteres Datenkabel 30 eingesteckt werden. Dieses ist als sogenanntes Patchkabel ausgeführt, also an beiden Enden mit Steckern 31 vorkonfektioniert. Es ist als Massenware kostengünstig verfügbar und lässt sich im Schadensfall durch Stecken einfach austauschen. Mit dem weiteren Datenkabel 30 erfolgt die Anbindung ans Gebäudenetz, vorliegend über eine Anschlussdose 32, die das Glasfasersignal konvertiert. Die Anschlussdose 32 muss aber im Allgemeinen nicht im selben Raum wie die "Datenkabel-Steckdose" platziert werden.

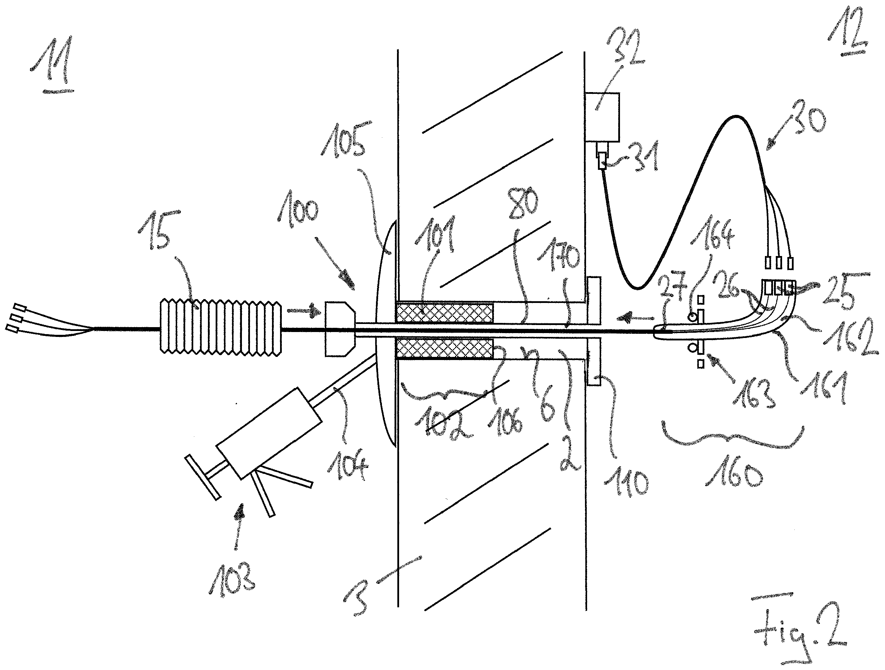

Figur 2 illustriert eine weitere, in Teilen und funktional vergleichbare Variante, wobei Teile mit derselben oder vergleichbarer Funktion mit den gleichen Bezugszeichen versehen sind (und insofern auch auf die Beschreibung zu Figur 1 verwiesen wird). Auch in diesem Fall ist in der Durchgangsöffnung 2 eine Durchführung 100 befestigt, und zwar vorliegend mit einem Vergussmaterial 101. Dieses füllt in einem Axialabschnitt 102 der Durchgangsöffnung 2 den Ringraum zwischen einem Hülsrohr 80 und der Laibung 6 auf. Das Vergussmaterial 101, vorliegend ein 2-Komponenten Polyurethanschaum, wird mit einer Kartuschenpistole 103 durch einen Injektionsschlauch 104 eingebracht, der einen Flansch 105 der Durchführung 100 durchsetzt. Das Vergussmaterial 101 kann entweder direkt in den Ringraum oder, wie im vorliegenden Beispiel, in einen außenseitig am Hülsrohr 80 angeordneten Mantel 106 injiziert werden. Dieser hält das noch fließfähige Vergussmaterial 101 anfangs beisammen und wird unter dem zunehmenden Druck expandiert.

An der dem Flansch 105, der zusammen mit dem Mantel 106 bereits werkseitig fest auf dem Hülsrohr 80 montiert ist, entgegengesetzten Seite wird ein Flanschstück 110 auf das Hülsrohr gesetzt, z. B. aufgeschraubt oder -gerastet. An diesem wird das Ansetzstück 160 befestigt, welches den bzw. die Stecker 25 trägt. Dieses Ansetzstück 160, das axial in einen von der Durchführung 100, konkret dem Hülsrohr 80, gebildeten Kanal 170 eingeschoben wird (der Kanal 170 ist im Verhältnis etwas kleiner dargestellt, in der Praxis wird er so bemessen, dass das Ende des Ansetzstücks hineinrutscht), weist ein Ansetzstückgehäuse 161 auf, das einen mit einer Vergussmasse 162 gefüllten Hohlraum begrenzt. In diesem Hohlraum endet der Kabelmantel 27, werden also die einzelnen Glasfasern 26 verzweigt. Die Vergussmasse 162 umschließt und schützt die Glasfasern 26, ferner hält sie auch die Steckverbinder des Steckers 25. An dem Gehäuseteil 161 ist außenseitig ein Flansch 163 vorgesehen, der an dem Flanschstück 110 festgeschraubt wird. Zur Abdichtung zwischen Durchführung 100 und Ansetzstück 160 ist ein Elastomerring 164 vorgesehen.

Gebäudeaußenseitig, also auf der ersten Seite 11, wird das Hülsrohr 80 mit einem Schutzrohr 15 verlängert. Dieses erstreckt sich bis zu einem Anschlussgehäuse 200, vgl. Figur 3 zur Illustration. Diese zeigt eine schematische Aufsicht, zu erkennen ist ein Gebäude 201, das auf einem Grundstück 202 steht. Zwischen diesem und einer Straße 203 verläuft die Grundstücksgrenze 204. Unterirdisch entlang der Straße 203, konkret unter einem Gehweg 203.1 neben der Fahrbahn 203.2, verläuft ein Leerrohrstrang 205. Hierbei handelt es sich um ein Bündel von Leerrohren, wobei an einer jeweiligen Abzweigungsstelle 206 zu einem jeweiligen Gebäude 201 entlang der Straße jeweils ein Leerrohr 207 abgezweigt wird. Im Allgemeinen kann ein solches Leerrohr 207 auch direkt zum Gebäude 201 verlegt werden, und es würde dann ein Datenkabel direkt zwischen dem Gebäude 201 und dem Verteilerkasten 208 in dem Leerrohr verlegt werden (typischerweise durch Einblasen vom Verteilerkasten 208 her).

Vorliegend erfolgt die Anbindung des Gebäudes 201 jedoch über das Anschlussgehäuse 200, das Leerrohr 207 ist also an des Anschlussgehäuse 200 angebunden, und dieses ist seinerseits über das Schutzrohr 15 an das Gebäude 201 angebunden. Dies kann bspw. einen logistischen Vorteil dahingehend ergeben, dass vom Verteilerkasten 208 aus sämtliche Anschlussgehäuse entlang der Straße 203 in einem Arbeitszug angebunden werden können, es kann also jeweils vom Verteilerkasten her ein Datenkabel bis in das jeweilige Anschlussgehäuse verlegt, insbesondere eingeblasen werden. Nach dem Einblasen kann jeweils ein Stecker angespleißt werden, danach steht dann im jeweiligen Anschlussgehäuse 200 also ein Datenkabel mit Stecker bereit. Dieses wird dann mit dem in den Figuren 1 und 2 gezeigten, mit einem Stecker vorkonfektionierten Datenkabel 10 verbunden, also funktional ins Gebäude hinein verlängert.

## Patentansprüche

1. Verwendung einer Durchführung (1,100) und eines Ansetzstücks (16,160) mit einem Datenkabel (10), wobei
i) die Durchführung (1,100) an oder in einer Durchgangsöffnung (2) in einer Wand (3) oder Bodenplatte eines Gebäudes (201) befestigt wird;
ii) durch die Durchführung (1,100) und damit Durchgangsöffnung (2) das Datenkabel (10) solchermaßen verlegt wird, dass es sich von einer ersten (11) zu einer entgegengesetzten zweiten Seite (12) der Wand (3) oder Bodenplatte erstreckt;
iii) von der zweiten Seite (12) der Wand (3) oder Bodenplatte her das Ansetzstück (16,160) an oder in die Durchgangsöffnung (2) gesetzt und dort befestigt wird, wobei das Ansetzstück (16,160) einen Stecker (25) des Datenkabels (10) aufweist, über den ein weiteres Datenkabel (30) mit dem Datenkabel (10) zusammensteckbar ist.

2. Verwendung nach Anspruch 1, bei welcher die Durchführung (1,100) einen Kanal (17,170) bildet, in welchen das Ansetzstück (16,160) in Schritt iii) zumindest teilweise eingeschoben wird.

3. Verwendung nach Anspruch 1 oder 2, bei welcher die Durchführung (1,100) ein Hülsrohr (8,80) aufweist, das in Schritt i) in die Durchgangsöffnung (2) eingesetzt und darin befestigt wird.

4. Verwendung nach den Ansprüchen 2 und 3, bei welcher das Hülsrohr (80) den Kanal (170) bildet, in welchen das Ansetzstück (160) in Schritt iii) zumindest teilweise eingeschoben wird.

5. Verwendung nach einem der vorstehenden Ansprüche, bei welcher das Ansetzstück (16,160) in Schritt iii) gegen die Durchführung (1,100) gedichtet wird.

6. Verwendung nach den Ansprüchen 2 und 5, bei welcher das Ansetzstück (16) ein Elastomerelement (19) aufweist, das in Schritt iii) axial gestaucht und infolgedessen radial gegen eine den Kanal (17) begrenzende Innenwand (18) der Durchführung (1) gedichtet wird.

7. Verwendung nach Anspruch 6, bei welcher der Stecker (25) des Datenkabels (10) von einem Presskörper (21) des Ansetzstücks (16) getragen wird, mit welchem das Elastomerelement (19) in Schritt iii) axial gestaucht wird.

8. Verwendung nach einem der vorstehenden Ansprüche, bei welcher das Ansetzstück (160) eine erstarrte Vergussmasse (162) aufweist, welche das Datenkabel (10) und vorzugsweise auch den Stecker (25) hält.

9. Verwendung nach einem der vorstehenden Ansprüche, bei welcher die Durchführung (1) einen Elastomerkörper (4) aufweist und in Schritt i) mit dem Elastomerkörper (4) in der Durchgangsöffnung (2) befestigt wird, welcher dazu axial gestaucht und infolgedessen radial gegen eine die Durchgangsöffnung (2) begrenzende Laibung (6) gedichtet wird.

10. Verwendung nach einem der Ansprüche 1 bis 8, bei welcher die Durchführung (100) in Schritt i) mit einem Vergussmaterial (101) in der Durchgangsöffnung (2) befestigt wird, das dazu in einem fließfähigen Zustand in die Durchgangsöffnung (2) eingebracht wird und nach einem Härten die Durchführung (100) in der Durchgangsöffnung (2) hält.

11. Verwendung nach einem der vorstehenden Ansprüche, bei welcher die Durchführung (1,100) auf der ersten Seite (11) der Wand (3) oder Bodenplatte mit einem Schutzrohr (15) verlängert wird, in welchem in Schritt ii) das Datenkabel (10) verlegt wird.

12. Verwendung nach einem der vorstehenden Ansprüche, bei welcher die Durchführung (1,100) eine Gebäudeeinführung ist, also die erste Seite (11) der Wand (3) oder Bodenplatte eine Gebäudeaußenseite ist und die zweite Seite (12) eine Gebäudeinnenseite ist.

13. Verwendung nach Anspruch 12, bei welcher das Datenkabel (10) in Schritt ii) zwischen der Gebäudeinnenseite und einem auf der Gebäudeaußenseite in den Boden eingebauten Anschlussgehäuse (200) verlegt wird.

14. Verwendung nach einem der vorstehenden Ansprüche, bei welcher das Datenkabel (10) ein Glasfaserkabel ist.

15. Durchführungsanordnung, die sich vorzugsweise im Zuge einer Verwendung nach einem der vorstehenden Ansprüche ergibt, mit
einer Durchführung (1,100), die an oder in einer Durchgangsöffnung (2) in einer Wand (3) oder Bodenplatte eines Gebäudes (201) befestigt ist,
einem Datenkabel (10), das durch die Durchführung (1,100) und damit Durchgangsöffnung (2) solchermaßen verlegt ist, dass es sich von einer ersten zu einer entgegengesetzten zweiten Seite (12) der Wand (3) oder Bodenplatte erstreckt, und
einem Ansetzstück (16,160), das an oder in die Durchgangsöffnung (2) gesetzt und dort befestigt ist, wobei das Ansetzstück (16,160) einen Stecker (25) des Datenkabels (10) aufweist, über das ein weiteres Datenkabel (30) mit dem Datenkabel (10) zusammensteckbar ist.
